# EUROPEAN PATENT SPECIFICATION

(11) **EP 3 222 668 B1**
(45) Date of publication and mention of the grant of the patent: **19.07.2023**
(21) Application number: 15860931.3
(22) Date of filing: 26.10.2015
(51) Int. Cl.: C08L 77/06, C08L 23/26, C08L 51/06, H01M 8/04

(54) **USE OF A HOSE AND USE OF A POLYAMIDE COMPOSITION FOR PREPARING AN INNER LAYER OF THE HOSE COMING INTO CONTACT WITH HIGH-PRESSURE HYDROGEN**
VERWENDUNG EINES SCHLAUCHS UND VERWENDUNG EINER POLYAMID-ZUSAMMENSETZUNG ZUR HERSTELLUNG EINER INNEREN SCHICHT DES SCHLAUCHS DIE MIT HOCHDRUCK-WASSERSTOFF IN KONTAKT KOMMT
UTILISATION D'UN TUYAU ET UTILISATION D'UNE COMPOSITION DE RÉSINE POLYAMIDE POUR PRÉPARER UNE COUCHE INTERNE DU TUYAU ENTRANT EN CONTACT AVEC DE L'HYDROGÈNE SOUS HAUTE PRESSION

(30) Priority: 20.11.2014 JP 2014235139
(43) Date of publication of application: 27.09.2017
(73) Proprietor: Toray Industries, Inc., Tokyo 103-8666 (JP)
(72) Inventor: OCHIAI, Shinichiro, Nagoya-shi Aichi 455-8502 (JP); SATO, Daisuke, Ichihara-shi Chiba 2990196 (JP); KOBAYASHI, Sadayuki, Nagoya-shi Aichi 455-8502 (JP)
(74) Representative: Mewburn Ellis LLP
(86) International application number: PCT/JP2015/080094
(87) International publication number: WO 2016/080151

(56) References cited:
- EP-A1- 3 042 758
- EP-A1- 3 069 871
- EP-A1- 3 069 873
- WO-A1-2013/114689
- WO-A1-2013/136596
- DE-A1-102005 061 530
- JP-A- 2007 204 674
- JP-A- 2009 191 871
- US-A- 5 488 974
- US-A1- 2011 139 258
- US-A1- 2013 048 136
- US-A1- 2013 216 751
- US-A1- 2014 065 338
- US-B2- 8 691 911

## Description

### Technical Field

The present invention relates to the use of a hose where it is exposed to high-pressure hydrogen the hose comprising a molded article made of a polyamide resin composition.

### Background Art

Fuel-cell electric vehicles, which are equipped with fuel cells that generate electricity by electrochemical reaction of hydrogen with oxygen in the air, the electricity generated by the fuel cells being supplied to motors and used as driving force, have recently been receiving attention as countermeasures against the depletion of petroleum fuel and the demand for reductions in toxic gas emission. Conventional resin tanks and hoses disadvantageously undergo deformation or breakage with repeated charging and discharging of high-pressure hydrogen. This is because hydrogen, for its small molecular size, readily permeates through the resins as compared, for example, to natural gas, which has a relatively large molecular size, and high-pressure hydrogen, as compared to hydrogen at atmospheric pressure, may be accumulated in the resins in larger amounts.

For example, a tank comprising a metallic end component, a polyamide resin liner surrounding the end component, and a layer for a structure of a fiber impregnated with a thermosetting resin that surrounds the liner is disclosed as a tank for storage of a gas such as hydrogen that is mounted on a fuel-cell electric vehicle (see Patent Document 1, for example). For example, a hydrogen tank liner made of a hydrogen tank liner material comprising a polyamide resin composition containing a polyamide 6, a copolyamide, and an impact modifier is disclosed as a hydrogen tank liner having excellent gas barrier properties and high impact resistance at low temperatures (see Patent Document 2, for example).

In addition, a hose for charging hydrogen comprising an inner layer made of nylon, polyacetal, ethylene-vinylalcohol copolymer, or the like is disclosed as a hose for charging a fuel-cell vehicle or the like with hydrogen from a hydrogen station (see Patent Document 3, for example).

### Prior Art Documents

Patent Document 1: JP 2011-505523 W; Patent Document 2: JP 2009-191871 A; and Patent Document 3: JP 2010-031993 A.
US2013/216751 A proposes a resin hose which has a resin layer composed of aliphatic polyamide (A) and semi-aromatic polyamide (B). Examples show single layer structures produced using resin compositions containing PA 612 as the aliphatic polyamide with a maleic anhydride-modified ethylene-butene copolymer. US2011/0139258 A discloses two-layer hoses which include a polyamide layer and an inner barrier layer of EVOH. Example polyamide layers are obtained using compositions containing PA 612 or PA612/6T with additives such as maleic anhydride grafted ethylene-octene copolymer or maleic anhydride grafted EPDM.
US 8691911 B2 discloses melt-blended thermoplastic compositions comprising polyamide PA 612/6T or PA 610/6T with impact modifiers such as maleic anhydride grafted ethylene-propylene-norbomene rubber, which are proposed for various molding applications. US 2013/0048136 A shows compositions for flexible tubes which contain PA 610 or PA 612 units with additives such as maleic anhydride grafted ethylene copolymer and maleic anhydride modified EPDM in Tables 5 and 6. Similar compositions are shown in US2014/0065338 A. Co-pending application EP 3042758 A shows in Examples 10 and 11 multi-layered tubes having an outermost layer obtained from compositions comprising either PA 610 or PA 612 with a maleic anhydride-modified ethylene-1-butene copolymer.
US 5 488 974 describes a composite flexible hose comprising an innermost layer, an intermediate rubber layer, a fiber reinforced layer and an outer surface rubber layer, which are laminated sequentially from the inner side of the hose, where the innermost layer is constituted of a modified polyamide obtained by blending polyamide with modified polyolefin containing carboxyl group.
DE102005061530 describes a thermoplastic multilayer composite in hollow body form, having internal polyamide (PA)-based layer(s) (adjoining the hollow cavity), barrier layer(s) and thermoplastic outer layer(s) (adjoining the exterior), the barrier is based on ethylene-vinyl alcohol copolymer or fluoropolymer and the outer layer is of homopolyamide-based mixture containing a compatibility modifier.

### Summary of the Invention - Problems to be Solved by the Invention

On the other hand, the tank disclosed in Patent Document 1, however, has insufficient heat cycle resistance, because, when it is subject to repeated temperature changes (heat cycles) from -40°C or lower to 90°C or higher due to charging and discharging of high-pressure hydrogen, cracks tend to occur at the joint between the resin portion and the metal portion. The hydrogen tank liner disclosed in Patent Document 2, although improved somewhat in heat cycle resistance, has still insufficient heat cycle resistance. The resin composition disclosed in Patent Document 2 has disadvantages in that permeation of hydrogen gas and absorption of hydrogen into the resin are likely to occur due to low crystalline property of the polyamide resin, and the hydrogen tank liner suffers failure points with repeated charging and discharging of high-pressure hydrogen.

The hose for charging hydrogen disclosed in Patent Document 3 is described as a hose comprising an inner layer made of a nylon resin having a dry hydrogen gas permeation coefficient of 1 × 10⁻⁸ cc•cm/cm²•sec.•cmHg or less at the temperature of 90°C. However, there is no detailed description of what specifically the nylon resin is. Furthermore, common nylon resins were regarded to have insufficient flexibility and heat cycle resistance to use for a hose for charging hydrogen.

In view of the above problems of the related art, it is an object of the present invention to provide a hose for use in high pressure applications, the hose comprising a molded article having excellent flexibility and heat cycle resistance and less likely to suffer failure points despite repeated charging and discharging of high-pressure hydrogen.

### Means for Solving the Problems

To achieve the above object, the present invention provides a hose for use with high-pressure hydrogen as defined in the accompanying claims. The inner layer of the hose comprises 100 parts by weight of a polyamide resin (A) including a unit derived from hexamethylenediamine and a unit derived from an aliphatic dicarboxylic acid of 8 to 12 carbon atoms and 5 to 100 parts by weight of an ethylene/α-olefin copolymer (B) modified with an unsaturated carboxylic acid and/or a derivative thereof.

If a polyamide resin other than the component (A) is added, its amount is not more than 4 parts by weight based on 100 parts by weight of polyamide resin (A).

The hose comprises a reinforcement layer on the outside of an inner layer comprising the above-described polyamide resin composition. The invention concerns the use of the present hose in applications exposed to high-pressure hydrogen, as defined in the accompanying claims. A further aspect concerns the use of the above-described polyamide composition for an inner layer of a hose exposed to high-pressure hydrogen, as defined in the accompanying claims.

### Effects of the Invention

The present invention provides the use of a hose that comprises a molded article having excellent flexibility and heat cycle resistance and less likely to suffer failure points despite repeated charging and discharging of high-pressure hydrogen. The hose for use according to the present invention comprises the molded article that has excellent flexibility and heat cycle resistance and unlikeliness to suffer failure points despite repeated charging and discharging of high-pressure hydrogen, can be advantageously used in applications exposed to high-pressure hydrogen.

### Brief Description of the Drawing

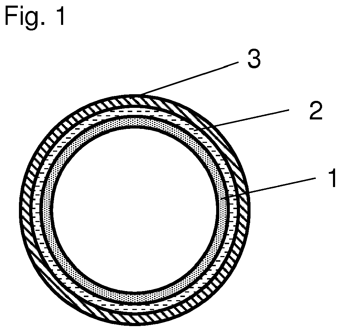

FIG. 1 is a cross section view of a preferred aspect of the hose for high-pressure hydrogen of the present invention.

### Mode for Carrying Out the Invention

The present invention will now be described in more detail.

The polyamide resin composition for a molded article exposed to high-pressure hydrogen used in the present invention (hereinafter referred to as "the polyamide resin composition") comprises at least a polyamide resin (A) including a unit derived from hexamethylenediamine and a unit derived from an aliphatic dicarboxylic acid of 8 to 12 carbon atoms (hereinafter referred to as "the polyamide resin (A)") and an ethylene/α-olefin copolymer (B) modified with an unsaturated carboxylic acid and/or a derivative thereof (hereinafter referred to as "the ethylene/α-olefin copolymer (B)"). The polyamide resin (A) including a unit derived from hexamethylenediamine and a unit derived from an aliphatic dicarboxylic acid of 8 to 12 carbon atoms has excellent moldability and gas barrier property. The polyamide resin (A) also has excellent flexibility. This can relax strain of a molded article due to temperature changes, and thus the polyamide resin (A) has excellent heat cycle resistance. Furthermore, since the polyamide resin (A) has high crystallinity, it can reduce permeation of hydrogen gas and absorption of hydrogen into the resin, and thus can provide a molded article in which failure points are unlikely to occur despite repeated charging and discharging of high-pressure hydrogen. Combining the polyamide resin (A) with the ethylene/α-olefin copolymer (B) modified with an unsaturated carboxylic acid and/or a derivative thereof can improve the flexibility and heat cycle resistance. Molded articles used in applications exposed to high-pressure hydrogen are subject to repeated temperature changes (heat cycles) from - 40°C or lower to 90°C or higher due to charging and discharging of high-pressure hydrogen. Thus, for example, in the case that a molded article is a composite article having a resin portion and a metal portion, cracks tend to occur at the joint between the resin portion and the metal portion. Adding the ethylene/α-olefin copolymer (B) modified with an unsaturated carboxylic acid and/or a derivative thereof can prevent such cracks that may occur at the joint between the resin portion and the metal portion due to repeated heat cycles.

The polyamide resin (A) used in the present invention is a polyamide resin composed mainly of a unit derived from hexamethylenediamine and a unit derived from an aliphatic dicarboxylic acid of 8 to 12 carbon atoms. Other monomers may be copolymerized to the extent that the object of the present invention is not adversely affected. "Composed mainly of" means that the unit derived from hexamethylenediamine and the unit derived from an aliphatic dicarboxylic acid of 8 to 12 carbon atoms are contained in a total amount of 50 mol% or more based on 100 mol% of total monomer units constituting the polyamide resin. The unit derived from hexamethylenediamine and the unit derived from an aliphatic dicarboxylic acid of 8 to 12 carbon atoms are more preferably contained in an amount of 70 mol% or more, still more preferably 90 mol% or more.

Examples of an aliphatic dicarboxylic acid of 8 to 12 carbon atoms include sebacic acid, suberic acid, azelaic acid, undecanedioic acid, and dodecanedioic acid. Two or more of these may be used. Of these, sebacic acid or dodecanedioic acid, which can provide a polyamide resin composition having an excellent balance of crystalline property and strength, are preferred, and sebacic acid is particularly preferred.

Another examples of the monomers to be copolymerized include amino acids such as 6-aminocaproic acid, 11-aminoundecanoic acid, 12-aminododecanoic acid, and p-aminomethylbenzoic acid; lactams such as ε-caprolactam and ω-laurolactam; aliphatic diamines such as tetramethylenediamine, pentamethylenediamine, 2-methylpentamethylenediamine, undecamethylenediamine, dodecamethylenediamine, 2,2,4-/2,4,4-trimethylhexamethylenediamine, and 5-methylnonamethylenediamine; aromatic diamines such as m-xylenediamine and p-xylylenediamine; alicyclic diamines such as 1,3-bis(aminomethyl) cyclohexane, 1,4-bis(aminomethyl) cyclohexane, 1-amino-3-aminomethyl-3,5,5-trimethylcyclohexane, bis(4-aminocyclohexyl) methane, bis(3-methyl-4-aminocyclohexyl) methane, 2,2-bis(4-aminocyclohexyl) propane, bis(aminopropyl) piperazine, and aminoethylpiperazine; aliphatic dicarboxylic acids such as adipic acid, malonic acid, succinic acid, glutaric acid, pimelic acid, tetradecanedioic acid, pentadecanedioic acid, and octadecanedioic acid; aromatic dicarboxylic acids such as terephthalic acid, isophthalic acid, 2-chloroterephthalic acid, 2-methylterephthalic acid, 5-methylisophthalic acid, 5-sodium sulfoisophthalic acid, hexahydroterephthalic acid, and hexahydroisophthalic acid; and alicyclic dicarboxylic acids such as 1,4-cyclohexanedicarboxylic acid, 1,3-cyclohexanedicarboxylic acid, 1,2-cyclohexanedicarboxylic acid, and 1,3-cyclopentanedicarboxylic acid. Two or more of these monomers may be copolymerized.

The polyamide resin (A) may have any degree of polymerization but preferably has a relative viscosity, as measured at 25°C in a 98% concentrated sulfuric acid solution at a resin concentration of 0.01 g/ml, in the range of 1.5 to 7.0. A relative viscosity of 1.5 or more leads to a moderately high viscosity of the polyamide resin composition, which can reduce air entrapment during molding to further improve the moldability. The relative viscosity is more preferably 1.8 or more. On the other hand, a relative viscosity of 7.0 or less leads to a moderately low viscosity of the polyamide resin composition, which can further improve the moldability.

The amount of terminal amino group of the polyamide resin (A) is preferably, but not necessarily, in the range of 1.0 to 10.0 × 10⁻⁵ mol/g. The amount of terminal amino group in the range of 1.0 to 10.0 × 10⁻⁵ mol/g can provide a sufficient degree of polymerization and a molded article with improved mechanical strength. The amount of terminal amino group of the polyamide resin (A) can be determined by dissolving the polyamide resin (A) in a mixed solvent of phenol and ethanol (83.5:16.5 (volume ratio)) and titrating the resulting solution using a 0.02N aqueous hydrochloric acid solution.

The ethylene/α-olefin copolymer (B) used in the present invention is an ethylene/α-olefin copolymer modified with an unsaturated carboxylic acid and/or a derivative thereof. The derivative of an unsaturated carboxylic acid is an unsaturated carboxylic acid compound having a carboxyl group whose hydroxy moiety is substituted, and examples include metal salts, acid halides, esters, acid anhydrides, amides, and imides of unsaturated carboxylic acids.

Examples of unsaturated carboxylic acids and/or derivatives thereof include acrylic acid, methacrylic acid, maleic acid, fumaric acid, itaconic acid, crotonic acid, methyl maleic acid, methyl fumaric acid, mesaconic acid, citraconic acid, glutaconic acid, and metal salts of these carboxylic acids; unsaturated carboxylates such as methyl hydrogen maleate, methyl hydrogen itaconate, methyl acrylate, ethyl acrylate, butyl acrylate, 2-ethylhexyl acrylate, hydroxyethyl acrylate, methyl methacrylate, 2-ethylhexyl methacrylate, hydroxyethyl methacrylate, aminoethyl methacrylate, dimethyl maleate, and dimethyl itaconate; acid anhydrides such as maleic anhydride, itaconic anhydride, citraconic anhydride, endo-bicyclo-(2,2,1)-5-heptene-2,3-dicarboxylic acid, and endo-bicyclo-(2,2,1)-5-heptene-2,3-dicarboxylic anhydride; and maleimide, N-ethylmaleimide, N-butylmaleimide, N-phenylmaleimide, glycidyl acrylate, glycidyl methacrylate, glycidyl ethacrylate, glycidyl itaconate, glycidyl citraconate, and 5-norbomene-2,3-dicarboxylic acid. Of these, unsaturated dicarboxylic acids and acid anhydrides thereof are preferred, and maleic acid or maleic anhydride are particularly preferred.

The ethylene/α-olefin copolymer can be modified with these unsaturated carboxylic acids or derivatives thereof, for example, by copolymerization of an ethylene/α-olefin copolymer and an unsaturated carboxylic acid and/or a derivative thereof or by graft incorporation of an unsaturated carboxylic acid and/or a derivative thereof into an unmodified ethylene/α-olefin copolymer using a radical initiator.

Preferred ethylene/α-olefin copolymers are copolymers of ethylene and α-olefins of 3 to 20 carbon atoms. Specific examples of α-olefins of 3 to 20 carbon atoms include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene. Two or more of these may be used. Of these α-olefins, α-olefins of 3 to 12 carbon atoms are preferred to improve mechanical strength. Furthermore, at least one of unconjugated dienes including 1,4-hexadiene, dicyclopentadiene, 2,5-norbornadiene, 5-ethylidenenorbornene, 5-ethyl-2,5-norbornadiene, and 5-(1'-propenyl)-2-norbornene may be copolymerized.

The α-olefin content of the ethylene/α-olefin copolymer is preferably 1 to 30 mol%, more preferably 2 to 25 mol%, still more preferably 3 to 20 mol%.

The ethylene/α-olefin copolymer (B) may have any hardness. However, to further improve the heat cycle resistance of a molded article made of a polyamide resin composition, the ethylene/α-olefin copolymer (B) preferably has a Shore A hardness determined according to ASTM D2240-05 of 90 A or less, more preferably 80 A or less.

The amounts of the polyamide resin (A) and the ethylene/α-olefin copolymer (B) in the polyamide resin composition used in the present invention are selected such that the polyamide resin composition contains 5 to 100 parts by weight of the ethylene/α-olefin copolymer (B) per 100 parts by weight of the polyamide resin (A). Not less than 5 parts by weight of the ethylene/α-olefin copolymer (B) can improve the flexibility and the heat cycle resistance of the molded article. On the other hand, not more than 100 parts by weight of the ethylene/α-olefin copolymer (B) can prevent failure points from occurring even if charging and discharging of higher-pressure hydrogen is repeated. The amount of the ethylene/α-olefin copolymer (B) is more preferably not more than 80 parts by weight, still more preferably not more than 70 parts by weight, most preferably not more than 50 parts by weight.

To the polyamide resin composition used in the present invention, other components than the components (A) and (B) may optionally be added to the extent that the properties of the composition are not impaired. Examples of other components include fillers, thermoplastic resins other than the component (A), impact modifiers other than the component (B), and various additives.

For example, adding a filler can provide a molded article with improved properties such as strength and dimensional stability. The shape of the filler may be fibrous or non-fibrous, and a fibrous filler and a non-fibrous filler may be used in combination. Examples of fibrous fillers include glass fibers, glass milled fibers, carbon fibers, potassium titanate whiskers, zinc oxide whiskers, aluminum borate whiskers, aramid fibers, alumina fibers, silicon carbide fibers, ceramic fibers, asbestos fibers, gypsum fibers, and metal fibers. Examples of non-fibrous fillers include silicates such as wollastonite, zeolite, sericite, kaolin, mica, clay, pyrophyllite, bentonite, asbestos, talc, and alumina silicate; metal oxides such as alumina, silicon oxide, magnesium oxide, zirconium oxide, titanium oxide, and iron oxide; metal carbonates such as calcium carbonate, magnesium carbonate, and dolomite; metal sulfates such as calcium sulfate and barium sulfate; metal hydroxides such as magnesium hydroxide, calcium hydroxide, and aluminum hydroxide; and glass beads, ceramic beads, boron nitride, and silicon carbide. These fillers may be hollow. These fibrous fillers and/or non-fibrous fillers are preferably pretreated with coupling agents before use to provide more excellent mechanical properties. Examples of coupling agents include isocyanate compounds, organic silane compounds, organic titanate compounds, organic borane compounds, and epoxy compounds.

Examples of thermoplastic resins include polyamide resins other than the component (A), polyester resins, polyphenylene sulfide resins, polyphenylene oxide resins, polycarbonate resins, polylactic resins, polyacetal resins, polysulfone resins, polytetrafluoroethylene resins, polyetherimide resins, polyamide-imide resins, polyimide resins, polyethersulfone resins, polyether ketone resins, polythioether ketone resins, polyether ether ketone resins, styrene resins such as polystyrene resins and ABS resins, and polyalkylene oxide resins. Two or more of these thermoplastic resins may be added. In addition, when a polyamide resin other than the component (A) is added, its amount is not more than 4 parts by weight based on 100 parts by weight of the polyamide resin (A).

Examples of the impact modifier include olefin resins other than the component (B), acrylic rubber, silicone rubber, fluorine rubber, styrene rubber, nitrile rubber, vinyl rubber, urethane rubber, polyamide elastomers, polyester elastomers, and ionomers. Two or more of these may be added.

The impact modifier may be of any structure, for example, what is called a core-shell multilayer structure including at least one layer made of rubber and one or more layers made of polymers different from the rubber. The multilayer structure may be composed of two, three, or four or more layers and preferably has at least one inner rubber layer (core layer). Examples of the rubber constituting the rubber layer of the multilayer structure include, but are not limited to, rubbers obtained by polymerizing acrylic components, silicone components, styrene components, nitrile components, conjugated diene components, urethane components, ethylene components, propylene components, isobutene components, and other components. The different polymers constituting the layers other than the rubber layer of the multilayer structure may be any polymers having thermoplasticity and are preferably polymers having glass transition temperatures higher than that of the rubber layer. Examples of polymers having thermoplasticity include polymers containing unsaturated carboxylic acid alkyl ester units, unsaturated carboxylic acid units, unsaturated-glycidyl-containing units, unsaturated dicarboxylic anhydride units, aliphatic vinyl units, aromatic vinyl units, vinyl cyanide units, maleimide units, unsaturated dicarboxylic acid units, and other vinyl units.

Examples of various additives include anti-coloring agents, antioxidants, such as hindered phenols and hindered amines, release agents, such as ethylene bisstearyl amides and higher fatty acid esters, plasticizers, heat stabilizers, lubricants, ultraviolet absorbers, coloring agents, flame retardants, and blowing agents.

To the polyamide resin composition used in the present invention, copper compounds, which can improve long-term heat resistance, are preferably added together with the polyamide resin (A). Examples of copper compounds include cuprous chloride, cupric chloride, cuprous bromide, cupric bromide, cuprous iodide, cupric iodide, cupric sulfate, cupric nitrate, cupric phosphate, cuprous acetate, cupric acetate, cupric salicylate, cupric stearate, cupric benzoate, and complex compounds of these copper inorganic halides with, for example, xylylenediamine, 2-mercaptobenzimidazole, and benzimidazole. Two or more of these may be added. Of these, monovalent copper compounds, in particular, monohalogenated copper compounds are preferred, and, for example, cuprous acetate and cuprous iodide are preferred. The amount of copper compound is preferably 0.01 part by weight or more, more preferably 0.015 part by weight or more, based on 100 parts by weight of the polyamide resin (A). On the other hand, to prevent or reduce the coloring due to the release of metallic copper during molding, the amount of copper compound is preferably 2 parts by weight or less, more preferably 1 part by weight or less.

Together with the copper compounds, alkali halides may also be added. Examples of alkali halide compounds include lithium chloride, lithium bromide, lithium iodide, potassium chloride, potassium bromide, potassium iodide, sodium bromide, and sodium iodide. Two or more of these may be added. Potassium iodide and sodium iodide are particularly preferred.

A description will now be given of a method for preparing the polyamide resin composition used in the present invention. The thermoplastic polyamide resin composition used in the present invention can be prepared by any method, such as kneading the polyamide resin (A), the ethylene/α-olefin copolymer (B), and, optionally, other components in a batch. Any known kneading device, such as Banbury mixers, rolls, and extruders, can be employed. Other components such as various additives, when added to the polyamide resin composition used in the present invention, can be added at any timing. For example, when the polyamide resin composition used in the present invention is prepared using a twin-screw extruder, other components may be added at the same time as the polyamide resin (A) and the ethylene/α-olefin copolymer (B) are added; other components may be added, for example, by side feeding when the polyamide resin (A) and the ethylene/α-olefin copolymer(B) are melt kneaded; other components may be added after the polyamide resin (A) and the ethylene/α-olefin copolymer (B) are melt kneaded; or other components may be added to the polyamide resin (A) and melt kneaded before the ethylene/α-olefin copolymer (B) is added.

The polyamide resin composition is suitable for use for a molded article that comprises part of a hose for use in applications exposed to high-pressure hydrogen. The hose comprising the molded article is exposed to high-pressure hydrogen that is exposed to hydrogen at a pressure above atmospheric pressure. Being less likely to suffer failure points despite repeated charging and discharging of high-pressure hydrogen, the molded article can be used, as a molded article for a hose that in use is exposed to hydrogen at 20 MPa or higher, more preferably, as a molded article for a hose that in use is exposed to hydrogen at 30 MPa or higher. On the other hand, the molded article for a hose that is used in the present invention is used, as a molded article exposed to hydrogen at a 200 MPa or lower, more preferably, as a molded article exposed to hydrogen at 150 MPa or lower, still more preferably, as a molded article exposed to hydrogen at 100 MPa or lower.

The polyamide resin composition used in the present invention can be molded into molded articles by any method. Examples of molding methods include extrusion molding, injection molding, hollow molding, calender molding, compression molding, vacuum molding, foam molding, blow molding, and rotational molding. The shape of molded articles may be, for example, pellet-like, plate-like, fibrous, strand-like, film- or sheet-like, pipe-like, hollow, or box-like.

The molded article is used in the present invention, for its excellent heat cycle resistance and unlikeliness to suffer failure points despite repeated charging and discharging of high-pressure hydrogen, is suitable for use in other applications that are not in accordance with the present invention such as on-off valves for high-pressure hydrogen, check valves for high-pressure hydrogen, pressure-reducing valves for high-pressure hydrogen, pressure-regulating valves for high-pressure hydrogen, seals for high-pressure hydrogen, hoses for high-pressure hydrogen (including those in accordance with the present invention), tanks for high-pressure hydrogen, liners for high-pressure hydrogen, pipes for high-pressure hydrogen (including those in accordance with the present invention), packings for high-pressure hydrogen, pressure sensors for high-pressure hydrogen, pumps for high-pressure hydrogen, tubes for high-pressure hydrogen (including those in accordance with the present invention), regulators for high-pressure hydrogen, films for high-pressure hydrogen, sheets for high-pressure hydrogen, fibers for high-pressure hydrogen, joints for high-pressure hydrogen, or the like.

The molded article used in the present invention, for its excellence in both flexibility and heat cycle resistance, is suitable for use for a hose for high-pressure hydrogen in accordance with the present invention. The hose for high-pressure hydrogen is used as a hose for charging a fuel-cell vehicle or the like with hydrogen from a hydrogen station. Since the hose for high-pressure hydrogen is subject to repeated temperature changes (heat cycles) from -40°C or lower to 90°C or higher due to charging and discharging of high-pressure hydrogen, it is required to have high heat cycle resistance as well as flexibility.

A hose for high-pressure hydrogen, for use in accordance with the present invention is a hose having a reinforcement layer on the outside of an inner layer obtained by molding the polyamide resin composition used in the present invention into a tubular form. The pressure resistance of the hose is improved while maintaining the flexibility of the hose by providing the reinforcement layer on the outside. A more rpeferred hose is a hose further having a weather-resistant layer as the outermost layer. Since the hydrogen station is often installed outdoor, the hose for high-pressure hydrogen can be prevented from being deteriorated by having the weather-resistant layer as the outermost layer. The cross section view of such hose is shown in FIG. 1. A reinforcement layer 2 is provided outside a tubular inner layer 1 made of the polyamide resin composition used in the present invention, and a weather-resistant layer 3 is further provided as the outermost layer.

In view of high pressure resistance and flexibility, an aramid fiber or a poly-p-phenylene benzbisoxazole fiber is preferred as the material of the reinforcement layer, and a poly-p-phenylene benzbisoxazole fiber is more preferred to further improve the pressure resistance. Preferably, the reinforcement layer is provided by concentrically coating around the inner layer with these fibers.

Examples of the material of the weather-resistant layer include aramid fibers, polyester fibers, polyamide fibers, aramid resins, polyester resins, and polyamide resins. Preferably, the reinforcement layer is provided by concentrically coating around the reinforcement layer with these resins.

### Examples

The effects of the present invention will now be described in more detail with reference to examples. Evaluations in Examples and Comparative Examples were conducted by the following methods.

### (1) Flexibility: Flexural Modulus

Using each of the pellets obtained in Examples and Comparative Examples, bending test pieces having a thickness of 1/8 inches and conforming to ASTM D-790 were injection molded with an "SE-75DUZ-C250" injection molding machine available from Sumitomo Heavy Industries, Ltd. under the following molding conditions: mold temperature, 80°C; injection speed, 100 mm/sec; cooling time, 20 seconds. The temperature of the injection molding machine was set at 230°C-235°C-240°C-240°C from the downward part of the hopper to the tip part, in order.

The flexural moduluses of the molded articles obtained were evaluated according to ASTM D790:95 at 23°C. The flexural modulus was the average value obtained from three molded articles measured.

### (2) Heat Cycle Resistance

Each of the pellets obtained in Examples and Comparative Examples was overmolded at a thickness of 0.7 mm on a metal core of 48.6 mm × 48.6 mm × 28.6 mm using a "SE-75DUZ-C250" injection molding machine available from Sumitomo Heavy Industries, Ltd. under the following molding conditions: mold temperature, 80°C; injection speed, 100 mm/sec; cooling time, 20 seconds. The temperature of the injection molding machine was set at 250°C-255°C-260°C-260°C from the downward part of the hopper to the tip part, in order.

Three of the metal/resin composite molded articles obtained were allowed to stand at -45°C for one hour and then at 90°C for one hour. The resulting composite molded articles were visually observed to check the presence of cracks. This cycle was repeated, and the number of cycles until all of the three composite molded articles were cracked was determined and evaluated as follows: 1500 cycles or more, A; 1200 to 1499 cycles, B; 1199 cycles or less, C.

### (3) Resistance to Repeated Charging and Discharging of High-Pressure Hydrogen

Using each of the pellets obtained in Examples and Comparative Examples, prismatic test pieces of 63.5 mm × 12.6 mm × 12.6 mm were injection molded with an "SG-75H-MIV" injection molding machine available from Sumitomo Heavy Industries, Ltd. under the following molding conditions: mold temperature, 80°C; injection speed, 10 mm/sec; holding pressure, 10 MPa; pressure-holding time, 10 seconds; cooling time, 20 seconds. The temperature of the injection molding machine was set at 220°C-225°C-230°C-230°C from the downward part of the hopper to the tip part, in order.

The prismatic test pieces obtained of 63.5 mm × 12.6 mm × 12.6 mm were processed into the cubes of 5 mm × 5 mm × 5 mm by milling. The test pieces processed were subjected to X-ray CT analysis using "TDM1000-IS" available from Yamato Scientific Co., Ltd. to check the presence of failure points. A test piece having no failure point was placed in an autoclave, and then hydrogen gas was fed into the autoclave over five minutes to a pressure of 20 MPa. The pressure was held for 1 hours and then reduced to atmospheric pressure over five minutes. This cycle was repeated 100 times. The test piece after 100 cycles was subjected to X-ray CT analysis using "TDM1000-IS" available from Yamato Scientific Co., Ltd. to check the presence of failure points of 1 µm or larger. The test pieces having no failure points were evaluated as "Yes", and the test pieces having failure points were evaluated as "No".

### (Reference Example 1) Preparation of Polyamide 610 Resin (Polyamide Resin (A) Including Unit Derived from Hexamethylenediamine and Unit Derived from Aliphatic Dicarboxylic Acid of 8 to 12 Carbon Atoms)

An equimolar salt of hexamethylenediamine and sebacic acid was put into a polymerization can, and pure water of the same amount as the amount of the equimolar salt was added, subsequently N₂ substitution in the can was performed. The polymerization can was then heated with stirring to the final achieving temperature of 280°C while controlling so that the maximum internal pressure of the can was 1.96 MPa for the reaction. The reactant was discharged into a water bath and pelletized with a strand cutter to give a pellet of a polyamide 610 resin. The pellet obtained had a relative viscosity of 3.5, as measured at 25°C in a 98% concentrated sulfuric acid solution at a resin concentration of 0.01 g/ml. The amount of terminal amino group of the pellet obtained was 3.5× 10⁻⁵ mol/g, as determined by dissolving in a mixed solvent of phenol and ethanol (83.5:16.5 (volume ratio)) and titrating the resulting solution using a 0.02N aqueous hydrochloric acid solution.

Materials used in Examples and Comparative Examples and abbreviations thereof are described below.
PA6: polyamide 6 resin (melting point: 224°C, cooling crystallization temperature: 175°C, relative viscosity determined at 25°C in a 98% concentrated sulfuric acid solution at a resin concentration of 0.01 g/ml: 2.70)
PA11: polyamide 11 resin "Rilsan" (registered trademark) BESN TL (ARKEMA)
PA6/66: polyamide 6/66 resin "UBE Nylon" (registered trademark) 5034B (Ube Industries, Ltd.)
Impact modifier 1 (an ethylene/α-olefin copolymer (B) modified with an unsaturated carboxylic acid and/or a derivative thereof): maleic anhydride-modified ethylene/1-butene copolymer "TAFMER" (registered trademark) MH7020 (Mitsui Chemicals, Inc.) (Shore A hardness: 70 A)
Impact modifier 2: glycidyl methacrylate-modified polyethylene copolymer "BONDFAST" (registered trademark) 7L (Sumitomo Chemical Co., Ltd.) (Shore A hardness: 60 A)

### Examples 1 to 2 and Comparative Examples 1 to 3, 5, and 6

A twin-screw extruder (TEX30XSSST available from JSW) (LID = 45.5, wherein L is a distance from a feed port to a discharge port and D is a screw diameter ) was set to a cylinder temperature of 240°C, a screw arrangement including two kneading zone, and a screw speed of 200 rpm. Raw materials shown in Table 1 were fed into the extruder and melt kneaded. A gut discharged through a die was rapidly cooled by being passed through a cooling bath filled with water conditioned at 5°C over 20 seconds, and then pelletized with a strand cutter to give pellets. The pellets obtained were evaluated by the above-described methods. The results are shown in Table 1.

### Comparative Example 4

The pellet of the polyamide 11 resin "Rilsan" (registered trademark) BESN TL (ARKEMA) was evaluated by the above-described methods. The result is shown in Table 1.

**[Table 1]**

| | | | Example 1 | Example 2 | Comparative Example 1 | Comparative Example 2 | Comparative Example 3 | Comparative Example 4 | Comparative Example 5 | Comparative Example 6 |
|---|---|---|---|---|---|---|---|---|---|---|
| Composition | PA610 | Parts by weight | 100 | 100 | 100 | 100 | - | - | - | - |
| | PA6 | Parts by weight | - | - | - | - | 100 | - | 100 | 87.5 |
| | PA11 | Parts by weight | - | - | - | - | - | 100 | - | - |
| | PA6/66 | Parts by weight | - | - | - | - | - | - | - | 12.5 |
| | Impact modifier 1 | Parts by weight | 11 | 43 | - | - | - | - | 11 | 11 |
| | Impact modifier 2 | Parts by weight | - | - | 11 | - | - | - | - | - |
| Kneading condition | Barrel setting temperature | °C | 240 | 240 | 240 | 240 | 240 | - | 240 | 240 |
| Evaluation results | Flexural modulus | GPa | 1.45 | 1.03 | 1.60 | 2.19 | 2.71 | 1.29 | 2.28 | 1.79 |
| | Heat cycle resistance | - | A | A | B | C | C | C | C | C |
| | Failure point | - | No | No | No | No | No | Yes | No | Yes |

The results showed that a molded article made of a polyamide resin composition comprising a polyamide resin (A) including a unit derived from hexamethylenediamine and a unit derived from an aliphatic dicarboxylic acid of 8 to 12 carbon atoms and an ethylene/α-olefin copolymer (B) modified with an unsaturated carboxylic acid and/or a derivative thereof has excellent flexibility and heat cycle resistance and is less likely to suffer failure points despite repeated charging and discharging of high-pressure hydrogen.

### Industrial Applicability

The present invention provides the use of a hose comprising a molded article having excellent flexibility and heat cycle resistance and less likely to suffer failure points despite repeated charging and discharging of high-pressure hydrogen. Having these properties, the molded article made of the polyamide resin composition can be used in the present invention wherein it is exposed to high-pressure hydrogen.

### Description of Symbol

1: Inner layer
2: Reinforcement layer
3: Weather-resistant layer

## Claims

1. Use of a hose for applications wherein the hose is exposed to high-pressure hydrogen at 20 MPa or higher, the hose comprising a reinforcement layer on the outside of an inner layer comprising a polyamide resin composition, the composition comprising 100 parts by weight of a polyamide resin (A) including a unit derived from hexamethylenediamine and a unit derived from an aliphatic dicarboxylic acid of 8 to 12 carbon atoms and 5 to 100 parts by weight of an ethylene/α-olefin copolymer (B) modified with an unsaturated carboxylic acid and/or a derivative thereof, wherein if a polyamide resin other than the component (A) is added, its amount is not more than 4 parts by weight based on 100 parts by weight of the polyamide resin (A).

2. Use of a hose according to claim 1, wherein the unit derived from hexamethylenediamine and the unit derived from an aliphatic dicarboxylic acid of 8 to 12 carbon atoms are contained in an amount of 90 mol% or more based on 100 mol% of the monomer units constituting the polyamide resin (A).

3. Use of a hose according to claim 1 or 2, wherein the unit derived from an aliphatic dicarboxylic acid of 8 to 12 carbon atoms is a unit derived from sebacic acid.

4. Use of a hose according to any one of claims 1 to 3, the hose further comprising a weather-resistant layer as the outermost layer.

5. Use of a polyamide composition for an inner layer of a hose exposed to high-pressure hydrogen at 20 MPa or higher, the composition comprising 100 parts by weight of a polyamide resin (A) including a unit derived from hexamethylenediamine and a unit derived from an aliphatic dicarboxylic acid of 8 to 12 carbon atoms and 5 to 100 parts by weight of the ethylene/α-olefin copolymer (B) modified with an unsaturated carboxylic acid and/or a derivative thereof, wherein if a polyamide resin other than the component (A) is added, its amount is not more than 4 parts by weight based on 100 parts by weight of the polyamide resin (A).

6. Use of a polyamide composition for an inner layer of a hose exposed to high-pressure hydrogen at 20 MPa or higher, as claimed in claim 5, wherein the unit derived from hexamethylenediamine and the unit derived from an aliphatic dicarboxylic acid of 8 to 12 carbon atoms are contained in an amount of 90 mol% or more based on 100 mol% of the monomer units constituting the polyamide resin (A).

7. Use of a polyamide composition for an inner layer of a hose exposed to high-pressure hydrogen at 20 MPa or higher, as claimed in claim 5 or claim 6, wherein the unit derived from an aliphatic dicarboxylic acid of 8 to 12 carbon atoms is a unit derived from sebacic acid.

## Patentansprüche

1. Verwendung eines Schlauchs in Anwendungen, wobei der Schlauch Hochdruck-Wasserstoff bei 20 MPa oder mehr ausgesetzt ist, wobei der Schlauch eine Verstärkungsschicht auf der Außenseite einer Innenschicht aufweist, die eine Polyamidharzzusammensetzung umfasst, wobei die Zusammensetzung 100 Gewichtsteile eines Polyamidharzes (A), einschließlich einer Einheit, abgeleitet von Hexamethylendiamin, und einer Einheit, abgeleitet von einer aliphatischen Dicarbonsäure mit 8 bis 12 Kohlenstoffatomen, und 5 bis 100 Gewichtsteile eines Ethylen/α-Olefin-Copolymers (B), das mit einer ungesättigten Carbonsäure und/oder einem Derivat davon modifiziert ist, umfasst, wobei, falls ein Polyamidharz, das nicht Komponente (A) ist, hinzugefügt wird, dessen Menge nicht mehr als 4 Gewichtsteile, bezogen auf 100 Gewichtsteile des Polyamidharzes (A), beträgt.

2. Verwendung eines Schlauchs nach Anspruch 1, wobei die Einheit, abgeleitet von Hexamethylendiamin, und die Einheit, abgeleitet von einer aliphatischen Dicarbonsäure mit 8 bis 12 Kohlenstoffatomen, in einer Menge von 90 Mol-% oder mehr, bezogen auf 100 Mol-% der Monomereinheiten, aus denen das Polyamidharz (A) besteht, vorhanden sind.

3. Verwendung eines Schlauchs nach Anspruch 1 oder 2, wobei die Einheit, die von einer aliphatischen Dicarbonsäure mit 8 bis 12 Kohlenstoffatomen abgeleitet ist, eine Einheit ist, die von Sebacinsäure abgeleitet ist.

4. Verwendung eines Schlauchs nach einem der Ansprüche 1 bis 3, wobei der Schlauch weiters eine wetterbeständige Schicht als äußerste Schicht umfasst.

5. Verwendung einer Polyamidzusammensetzung für eine Innenschicht eines Schlauchs, der Hochdruck-Wasserstoff bei 20 MPa oder mehr ausgesetzt ist, wobei die Zusammensetzung 100 Gewichtsteile eines Polyamidharzes (A), einschließlich einer Einheit, abgeleitet von Hexamethylendiamin, und einer Einheit, abgeleitet von einer aliphatischen Dicarbonsäure mit 8 bis 12 Kohlenstoffatomen, und 5 bis 100 Gewichtsteile eines Ethylen/α-Olefin-Copolymers (B), das mit einer ungesättigten Carbonsäure und/oder einem Derivat davon modifiziert ist, umfasst, wobei, falls ein Polyamidharz, das nicht Komponente (A) ist, hinzugefügt wird, dessen Menge nicht mehr als 4 Gewichtsteile, bezogen auf 100 Gewichtsteile des Polyamidharzes (A), beträgt.

6. Verwendung einer Polyamidzusammensetzung für eine Innenschicht eines Schlauchs, der Hochdruck-Wasserstoff bei 20 MPa oder höher ausgesetzt ist, nach Anspruch 5, wobei die Einheit, abgeleitet von Hexamethylendiamin, und die Einheit, abgeleitet von einer aliphatischen Dicarbonsäure mit 8 bis 12 Kohlenstoffatomen, in einer Menge von 90 Mol-% oder mehr, bezogen auf 100 Mol-% der Monomereinheiten, aus denen das Polyamidharz (A) besteht, vorhanden sind.

7. Verwendung einer Polyamidzusammensetzung für eine Innenschicht eines Schlauchs, der Hochdruck-Wasserstoff bei 20 MPa oder mehr ausgesetzt ist, nach Anspruch 5 oder Anspruch 6, wobei die Einheit, die von einer aliphatischen Dicarbonsäure mit 8 bis 12 Kohlenstoffatomen abgeleitet ist, eine Einheit ist, die von Sebacinsäure abgeleitet ist.

## Revendications

1. Utilisation d'un tuyau pour des applications dans lesquelles le tuyau est exposé à de l'hydrogène à haute pression à 20 MPa ou plus, le tuyau comprenant une couche de renforcement sur l'extérieur d'une couche intérieure comprenant une composition de résine polyamide, la composition comprenant 100 parties en poids d'une résine polyamide (A) incluant une unité dérivée d'hexaméthylènediamine et une unité dérivée d'un acide dicarboxylique aliphatique de 8 à 12 atomes de carbone, et de 5 à 100 parties en poids d'un copolymère d'éthylène/α-oléfine (B) modifié avec un acide carboxylique insaturé et/ou un dérivé de celui-ci, dans laquelle si une résine polyamide autre que le composant (A) est ajoutée, sa quantité n'est pas supérieure à 4 parties en poids sur la base de 100 parties en poids de la résine polyamide (A).

2. Utilisation d'un tuyau selon la revendication 1, dans laquelle l'unité dérivée de l'hexaméthylènediamine et l'unité dérivée d'un acide dicarboxylique aliphatique de 8 à 12 atomes de carbone sont contenues en une quantité de 90 % en mole ou plus sur la base de 100 % en mole des unités monomères constituant la résine polyamide (A).

3. Utilisation d'un tuyau selon la revendication 1 ou 2, dans laquelle l'unité dérivée d'un acide dicarboxylique aliphatique de 8 à 12 atomes de carbone est une unité dérivée d'acide sébacique.

4. Utilisation d'un tuyau selon l'une quelconque des revendications 1 à 3, le tuyau comprenant en outre une couche résistant aux intempéries en tant que couche la plus extérieure.

5. Utilisation d'une composition de polyamide pour une couche intérieure d'un tuyau exposé à de l'hydrogène haute pression à 20 MPa ou plus, la composition comprenant 100 parties en poids d'une résine polyamide (A) incluant une unité dérivée d'hexaméthylènediamine et une unité dérivée d'un acide dicarboxylique aliphatique de 8 à 12 atomes de carbone, et de 5 à 100 parties en poids du copolymère d'éthylène/α-oléfine (B) modifié avec un acide carboxylique insaturé et/ou un dérivé de celui-ci, dans laquelle si une résine polyamide autre que le composant (A) est ajoutée, sa quantité n'est pas supérieure à 4 parties en poids sur la base de 100 parties en poids de la résine polyamide (A).

6. Utilisation d'une composition de polyamide pour une couche intérieure d'un tuyau exposé à de l'hydrogène haute pression à 20 MPa ou plus, selon la revendication 5, dans laquelle l'unité dérivée d'hexaméthylènediamine et l'unité dérivée d'un acide dicarboxylique aliphatique de 8 à 12 atomes de carbone sont contenues en une quantité de 90 % en mole ou plus sur la base de 100 % en mole des unités monomères constituant la résine polyamide (A).

7. Utilisation d'une composition de polyamide pour une couche intérieure d'un tuyau exposé à de l'hydrogène haute pression à 20 MPa ou plus, selon la revendication 5 ou la revendication 6, dans laquelle l'unité dérivée d'un acide dicarboxylique aliphatique de 8 à 12 atomes de carbone est une unité dérivée d'acide sébacique.
